# NEUE EUROPÄISCHE PATENTSCHRIFT

(11) **EP 1 597 007 B2**
(45) Veröffentlichungstag und Bekanntmachung des Hinweises auf die Entscheidung über den Einspruch: **21.06.2017**
(45) Hinweis auf die Patenterteilung: 26.12.2012
(21) Anmeldenummer: 04713001.8
(22) Anmeldetag: 20.02.2004
(51) Int. Cl.: B23D 23/00

(54) **Spannfutter**
Tool holder
Porte-outil

(30) Priorität: 20.02.2003 DE 10307437; 21.03.2003 DE 10312743
(43) Veröffentlichungstag der Anmeldung: 23.11.2005
(60) Teilanmeldung: 11166950.3
(73) Patentinhaber: Gühring KG, 72458 Albstadt (DE)
(72) Erfinder: HÄNLE, Peter, 72514 Inzighofen (DE); MATHEIS, Klaus, 88605 Sauldorf/Rast (DE); GSÄNGER, Dieter, 72511 Bingen (DE)
(74) Vertreter: Winter, Brandl, Fürniss, Hübner, Röss, Kaiser, Polte - Partnerschaft mbB
(86) Internationale Anmeldenummer: PCT/DE2004/000381
(87) Internationale Veröffentlichungsnummer: WO 2004/073910

(56) Entgegenhaltungen:
- EP-A- 0 776 728
- EP-A- 1 127 656
- EP-A- 1 203 631
- EP-A- 1 275 469
- EP-A1- 0 684 099
- EP-A1- 1 316 386
- EP-A1- 1 561 539
- WO-A-00/53368
- WO-A-2004/009288
- DE-A- 10 015 322
- DE-A- 19 835 677
- DE-A- 19 935 960
- DE-U- 20 119 639
- JP-U- S5 990 505
- PATENT ABSTRACTS OF JAPAN Bd. 2000, Nr. 05, 14. September 2000 (2000-09-14) -& JP 2000 042814 A (YUKIWA SEIKO INC), 15. Februar 2000 (2000-02-15)

## Beschreibung

Die Erfindung betrifft ein Spannfutter für ein Werkzeug nach dem Oberbegriff des Anspruchs 1 bzw. 5.

Aus der DE 199 35 960 A1 ist ein Spannfutter für ein Werkzeug mit einer Vorrichtung zur Zuführung eines Kühl- bzw. Schmiermediums von einer Spindel an ein Werkzeug mit einem Kühlkanal bekannt. Die EP 1 127 656 B1 beschreibt ein Spannfutter gemäß dem Oberbegriff des Anspruchs 1 bzw. 5, d.h. einen Werkzeughalter für eine Werkzeugmaschine, in welchem ein Verbindungsröhrchen gleitend und abhängig von der Länge eines einzusetzenden Werkzeugs längs verstellbar in einem Schmiermittelaufnahmerohr gelagert ist.

Weiterhin ist aus der TA 30 8243 01 der Firma bielomatik LEUZE GmbH + Co, D-72637 Neuffen ein derartiges Spannfutter bekannt. Dieses ist auch als Spannfutter für Werkzeuge verwendbar, welche in unterschiedlicher Tiefe im Spannfutter gehalten werden müssen und hierzu mittels einer Schrumpfverbindung oder mittels eines Hydrodehnspannfutters gehalten werden. Die Versorgung des Werkzeugs mit einem Kühl- bzw. Schmiermittel erfolgt über eine fest mit dem Futter verschraubte Hülse, welcher von der Spindel das Schmiermittel zugeführt wird, wobei in diese Hülse eine Rohrdüse eingepresst ist, die das Schmiermittel zu einer Stellschraube weiter transportiert. Hierbei ist die Rohrdüse bzw. das Rohrelement in der Stellschraube längsverschiebbar geführt und die Stellschraube ist mittels eines Drehschlüssels im Spannfutter ebenfalls längsverstellbar, so dass die Stellschraube auf Kontakt an das im Spannfutter gespannte Werkzeug herandrehbar ist. Die Stellschraube findet auch Verwendung zur manuellen Einstellung der Einstecktiefe des Werkzeugs, wobei zum Verdrehen der Stellschraube die Rohrdüse und die Hülse vorübergehend demontiert werden müssen. Diese vorübergehende Demontage ist auch erforderlich, wenn die Einstecktiefeneinstellung mittels einer Lanze automatisiert erfolgt (siehe z.B. Induktives Schrumpfgerät GISS 3000 im Katalog der Fa. Gühring: "Präzisions-Schneidwerkzeuge" Ausgabe 2002, Seite 958), um die Stellschraube nach dem Einstellvorgang auf Kontakt mit dem Werkzeug zu drehen, damit eine Verwirbelung der Kühl- bzw. Schmiermittelströmung in einem Freiraum zwischen der Stellschraube und dem Werkzeug vermieden ist. Nachteilig am Stand der Technik ist somit die Notwendigkeit, die in dem Spannfutter angeordnete Kühlmittelzuführung bei jedem für das Werkzeug erforderlichen Nachstellvorgang zu demontieren und zu montieren.

Aufgabe der Erfindung ist es ein Spannfutter vorzuschlagen, welches die Arbeitsschritte beim ersten und beim wiederholten Einstellen der Einstecktiefe eines Werkzeugs vereinfacht bzw. reduziert.

Die Aufgabe wird ausgehend vom Oberbegriff des Anspruchs 1 durch die kennzeichnenden Merkmale des Anspruchs 1 gelöst. In den Unteransprüchen sind vorteilhafte und zweckmäßige Weiterbildungen angegeben.

Das erfindungsgemäße Spannfutter weist ein Rohrelement auf, welches in der Hülse längsverschiebbar ist, an einem in der Hülse befindlichen Ende durch ein Stellwerkzeug betätigbar ist und mit der Stellschraube formschlüssig und/oder kraftschlüssig in Verbindung steht. Hierdurch ist es möglich die Stellschraube insbesondere bei der Ausbildung eines geeigneten Eingriffs am Rohrelement direkt mittels eines Stellwerkzeugs, welches durch die Hülse mit dem Eingriff zusammen wirkt, unter Zwischenschaltung des Rohrelements zu verdrehen, ohne das Rohrelement und die Hülse dazu demontieren zu müssen. Dies bedeutet, dass die Stellschraube nach einem automatisierten Einstellen der Einstecktiefe eines Werkzeugs, welche in einer speziellen Vorrichtung mittels einer Lanze vorgenommen wird, ohne Demontage von Hülse und Rohrelement an das Werkzeug herandrehbar ist. Ebenso ist es möglich bei einer manuellen Einstellung der Einstecktiefe des Werkzeugs, bei welcher statt der Lanze die Stellschraube als Anschlag für die Einstecktiefenbestimmung des Werkzeugs dient, die Einstellschraube ohne Demontage der Hülse und des Rohrelements mit dem Stellwerkzeug in die gewünschte Position zu drehen. Diese Vorteile hat der Anwender auch dann, wenn das Werkzeug in Folge der Abnutzung neu justiert, das heißt mit einer anderen Einstecktiefe eingespannt werden muss.

Weiterhin sieht die Erfindung vor das Rohrelement mit der Stellschraube zu verkleben oder drehfest zu verschrauben bzw. durch eine entsprechende Kontur drehfest zu verbinden. Hierdurch lassen sich rasch Rohrelemente unterschiedlicher Länge und/oder unterschiedlicher Konstruktion mit der Stellschraube kombinieren.

Erfindungsgemäß ist es vorgesehen, das Rohrelement und die Stellschraube einteilig und insbesondere als Drehteil auszubilden. Eine einteilige Ausbildung von Rohrelement und Stellschraube erlaubt eine besonders einfache Handhabung der Bauteile, weiterhin kann hier der Übergang des in dem Rohrelement angeordneten Kanals auf die Bohrung der Stellschraube nach strömungstechnischen Gesichtspunkten optimal gestaltet werden.

Es ist vorteilhaft, wenn das Stellwerkzeug durch einen Kanal der Hülse hindurch in den Eingriff des Rohrelements greift und hierbei in dem Kanal drehbar ist. Dies erlaubt das einfache Verstellen der Stellschraube.

Eine erfindungsgemäße Ausführungsvariante sieht vor, das Rohrelement in der Hülse und/oder in der Stellschraube längsverschiebbar zu lagern und die Stellschraube für die Betätigung durch ein Stellwerkzeug zu gestalten, wobei das Stellwerkzeug von der dem Werkzeug entgegengesetzten Seite durch die Hülse und das Rohrelement eingreifen kann und gegenüber der Hülse und dem Rohrelement frei drehbar ist. Hierdurch werden ebenfalls die bereits beschriebenen Vorteile erreicht. Weiterhin erlaubt das direkte Zusammenwirken des Stellwerkzeugs mit der Stellschraube eine Drehmomentübertragung, welche das Rohrelement nicht belastet, so dass dieses schwächer und somit kostengünstiger ausgelegt werden kann. Hierzu ist an der Stellschraube beispielsweise ein Eingriff für das Stellwerkzeug ausgebildet.

Weiterhin ist es vorgesehen, bei der beschriebenen Ausführungsvariante die Hülse und das Rohrelement einteilig auszubilden, um die Zahl der Kleinteile zu reduzieren und die Handhabung bzw. den Einbau der Kleinteile einfacher zu gestalten.

Eine zweckmäßige Ausgestaltung des Erfindungsgegenstandes sieht vor, die Rohrdüse gegenüber der Hülse abzudichten. Hierdurch ist ein ungewünschter Kühl- bzw. Schmiermittelaustritt in Freiräume zwischen der Vorrichtung und dem Spannfutter vermieden.

Insbesondere ist es vorgesehen, das Rohrelement gegenüber der Hülse mittels einer Berührungsdichtung, Lippendichtung oder wenigstens eines O-Rings abzudichten, wobei der O-Ring in der Hülse und/oder an dem Rohrelement gelagert ist. Eine derartige Abdichtung erlaubt die Längsverschiebung des Rohrelements in der Hülse und auch ein wiederholtes Trennen und Kuppeln der Bauteile zu deren Wartung.

Erfindungsgemäß ist es vorgesehen, am Rohrelement oder an der Stellschraube einen Eingriff auszubilden, welcher insbesondere als Aufnahme für einen Steckschlüssel, insbesondere einen Sechskantschlüssel auszubilden. Hierdurch kann das Stellwerkzeug direkt mit dem Rohrelement oder der Stellschraube zusammenwirken. Mit einem Steckschlüssel steht ein besonders schlankes Stellwerkzeug zur Verfügung, welches zielsicher durch die Hülse einführbar ist.

Weiterhin sieht die Erfindung vor, die Hülse mit einem Innendurchmesser zu versehen, welcher sich zu dem Rohrelement hin wenigstens abschnittsweise verjüngt. Hierdurch wird der Kühl- bzw. Schmiermittelstrom düsenartig auf das Rohrelement zugeleitet, um das Entstehen von Wirbeln zu vermeiden.

Eine vorteilhafte Ausführungsform des Erfindungsgegenstandes sieht vor, die Hülse mittels einer Gewindehülse bzw. Überwurfmutter am Spannfutter zu verschrauben. Hierdurch ist eine sichere und dennoch einfach lösbare Verbindung geschaffen, welche die einfache Wartung aller Bauteile erlaubt.

Weiterhin ist es vorgesehen, die Hülse mittels einer Ringdichtung gegenüber dem Spannfutter abzudichten. Hierdurch wird mit einfachsten Mitteln eine wirksame Abdichtung erreicht.

Erfindungsgemäß ist es auch vorgesehen, die Durchgangsbohrung der Stellschraube zum Werkzeug hin trichterförmig zu öffnen. Eine derartige trichterförmige Öffnung zu dem Werkzeug hin erlaubt eine optimale Anströmung und Versorgung der im Werkzeug verlaufenden Kanäle mit Kühl- bzw. Schmiermittel.

Die Erfindung sieht weiter vor, die Hülse, das Rohrelement und die Stellschraube aus Kunststoff und/oder Metall und/oder Keramik auszubilden und die Hülse und/oder das Rohrelement und/oder die Stellschraube mit einer Beschichtung zu versehen. Hierdurch ist es möglich, die einzelnen Bauteile optimal auf die an diese gestellten Anforderungen auszulegen.

Erfindungsgemäß ist es vorgesehen, die Hülse, das Rohrelement und die Stellschraube so auszubilden, dass diese von einem Verstellbolzen einer automatischen Vorrichtung zur Einstellung der Position des Werkzeugs durchdringbar sind, wobei der Verstellbolzen in Richtung der Längsachse des Spannfutters, z.B. zur Positionierung eines Werkzeugs verschiebbar ist.

Weiterhin sieht die Erfindung vor, das Rohrelement mittelbar oder unmittelbar mit dem Stellwerkzeug zu verdrehen. Eine unmittelbare Verstellung erlaubt den direkten Eingriff mit dem Stellwerkzeug in das Rohrelement und somit eine genaue Einstellbarkeit des Rohrelements, da nur wenig Spiel zwischen den zusammenwirkenden Komponenten vorhanden ist. Der Einsatz eines Adapters zwischen dem Stellwerkzeug ermöglicht die Ausbildung eines speziellen Eingriffs im Rohrelement bei gleichzeitiger Anwendbarkeit von Standardwerkzeugen als Stellwerkzeug.

Durch den mehrteiligen Aufbau des Rohrelements aus Teilelementen, welche aus unterschiedlichen Werkstoffen bestehen, ist es möglich das Rohrelement an unterschiedliche Anforderungen optimal anzupassen, so kann dass Rohrelement im Bereich des Eingriffs für das Stellwerkzeug insbesondere aus einem torsionsfesten Material wie Metal aufgebaut sein und im Bereich seiner Stirnseite, welche im Betrieb am Werkzeug anliegt, aus Kunststoff bestehen, um eine besonders gute Abdichtung zum Werkzeug zu erhalten.

Abschließend sieht die Erfindung vor, das Rohrelement und die Hülse miteinander zu koppeln, um eine mit dem Stellwerkzeug in die Hülse eingeleitete Drehbewegung auf das Rohrelement zu übertragen. Hierbei ist es vorgesehen, dass das Rohrelement gegenüber der Hülse längsverschiebbar ist, aber die Drehbewegung der Hülse auf das Rohrelement übertragen wird. Bei einer derartigen Ausbildung der beiden Bauteile ist es insbesondere vorgesehen diese aus unterschiedlichen Materialien herzustellen und so auf die jeweiligen Funktionen optimal anzupassen. Beispielsweise ist die Hülse aus Metall hergestellt, um ein optimales Zusammenwirken mit dem Stellwerkzeug zu gewährleisten und das Rohrelement ist aus Kunststoff ausgebildet, um einen optimal abdichtenden Anschluss an das Werkzeug zu erhalten. Für die Drehmomentübertragung sind Mitnehmer und Führungsschlitze in der Hülse bzw. im Rohrelement entsprechend den Werkstoffeigenschaften zu dimensionieren.

Weitere Einzelheiten der Erfindung werden anhand von schematisch dargestellten Ausführungsbeispielen beschrieben.

Hierbei zeigt:
Fig. 1 : einen Schnitt durch ein Spannfutter, bei welchem die Rohrdüse und die Stellschraube einteilig ausgeführt sind und
Fig. 2: einen Schnitt durch das in Fig. 1 gezeigte Spannfutter, mit einer Rohrdüse, die mit einer Stellschraube verklebt ist.

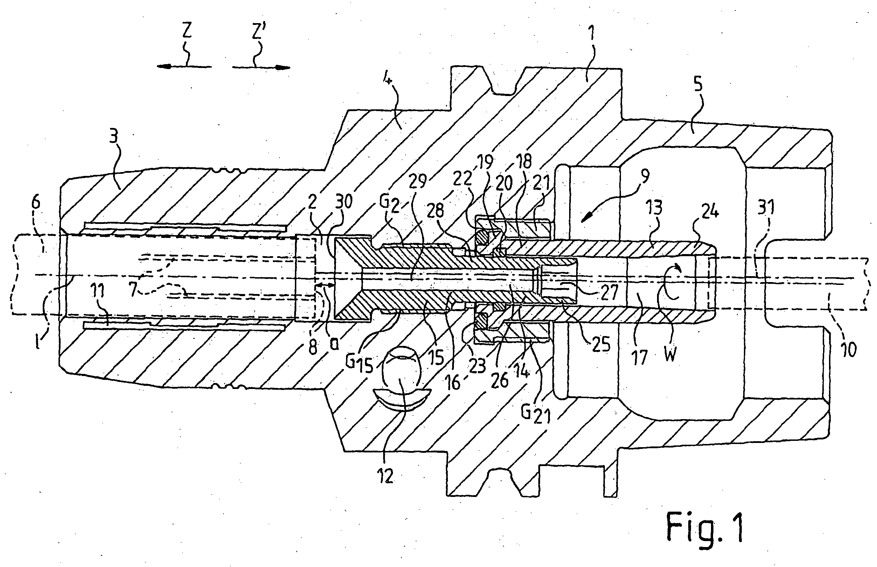

In **Fig. 1** ist ein Spannfutter 1 im Schnitt dargestellt. Das Spannfutter 1 weist eine Längsachse 1 auf. Entlang der Längsachse 1 durchläuft eine Bohrung 2 des Spannfutters 1, welche abschnittsweise unterschiedliche Durchmesser aufweist. Das Spannfutter 1 weist einen Spannabschnitt 3, einen Mittelabschnitt 4 und einen Kupplungsabschnitt 5 auf. Der Spannabschnitt 3 ist dazu vorgesehen ein Werkzeug 6 (mit gestrichelten Linien angedeutet) aufzunehmen, welches Mediumkanäle 7 zum Transport von Kühl- bzw. Schmiermedium an eine nicht dargestellte Werkzeugspitze aufweist, die in einer Bodenfläche 8 münden. Im Mittelabschnitt 4 ist in der Bohrung 2 eine Vorrichtung 9 zur Zuführung eines Kühl- bzw. Schmiermediums an die Mediumkanäle 7 des Werkzeugs 6 angeordnet. Über den Kupplungsabschnitt 5 erfolgt die Ankupplung des Spannfutters 1 an eine nicht dargestellte Spindel einer nicht dargestellten Werkzeugmaschine, wobei von der Spindel über eine Leitung 10 (gestrichelt dargestellt) das Kühl- bzw. Schmiermedium der Vorrichtung 9 zugeführt wird. Das Spannfutter 1 ist als sogenanntes Hydrodehnspannfutter ausgebildet, bei welchem das Werkzeug 6 hydraulisch gespannt wird, wobei der Druck auf das Werkzeug 6 über einen Ringkanal 11 erzeugt wird, der im Spannabschnitt 3 des Spannfutters 1 liegt. Das Erhöhen und Erniedrigen des Drucks erfolgt über eine Stellschraube (nicht dargestellt) welche in einer Bohrung 12 angeordnet ist. Die Vorrichtung 9 besteht im Wesentlichen aus einer Hülse 13, einem Rohrabschnitt 14 und einer Stellschraube 15, wobei das Rohrelement 14 und die Stellschraube 15 einteilig als Rohrschraube 16 ausgebildet sind. Die Hülse 13 weist eine Durchgangsbohrung 17 auf. In einem zum Werkzeug 6 hin orientierten Endbereich 18 ist die Hülse 13 mit einem ringförmigen Absatz 19 versehen und weist im Bereich der Durchgangsbohrung 17 eine O-Ringdichtung 20 auf. Mittels einer Gewindehülse 21 mit einem Außengewinde G₂₁ ist die Hülse 13 mit dem Spannfutter 1 verschraubt, wobei die Hülse 13 von der Gewindehülse 21 gegen eine Wandung 22 des Spannfutters 1 gedrückt wird. Hierbei übt die Gewindehülse 21 auf den Absatz 19 der Hülse 13 Druck aus und der Absatz 19 stützt sich über eine O-Ringdichtung 23 gegen die Wandung 22 ab. An einem weiteren Endabschnitt 24, welcher zu der nicht dargestellten Spindel orientiert ist, mündet die Leitung 10 in die Hülse 13. Diese Verbindung von Hülse 13 und Leitung 10 existiert jedoch nur, wenn das Spannfutter 1 an die Spindel gekuppelt ist. Das Rohrelement 14 ist in die Hülse 13 teilweise eingesteckt und ist gegenüber der Hülse 13 durch die in der Hülse gelagerte O-Ringdichtung 20 abgedichtet. An einem ersten Endabschnitt 25, welcher von dem Werkzeug 6 weg weist, ist ein vom Rohrelement 14 gebildeter Kanal 26 als Eingriff 27 für ein nicht dargestelltes Stellwerkzeug ausgebildet. Der Kanal 26 des Rohrelements 14 geht in einem in Richtung des Werkzeugs 6 orientierten Endabschnitt 28 in einen Kanal 29 über, welcher die einteilig mit dem Rohrelement 14 ausgebildete Stellschraube 15 in Richtung des Werkzeugs 6 durchläuft. Die Stellschraube 15 ist mit einem Außengewinde G₁₅ in einem Innengewinde G₂ der Bohrung 2, welche das Spannfutter 1 durchläuft, verstellbar geführt. Aus der in der Figur 1 dargestellten Position ist die Rohrschraube 16 in eine Pfeilrichtung z auf das Werkzeug 6 zu verstellbar. Dieses Verstellen bzw. Längsverschieben erfolgt mit Hilfe des nicht dargestellten Stellwerkzeugs, welches in die durch den Eingriff 27 gebildete Aufnahme für einen Steckschlüssel greift und die Rohrschraube 16 gegenüber dem Spannfutter 1 in eine Drehrichtung w um die Längsachse 1 dreht. Das Rohrelement 14 der Rohrschraube 16 wird bei dieser Bewegung von der Stellschraube 15 in die Pfeilrichtung x langsam aus der Hülse 13 herausgezogen und die Stellschraube 15 bewegt sich auf die Bodenfläche 8 des Werkzeugs 6 zu. Das Nachstellen der Stellschraube 15 bzw. des Rohrelements 14 ist abgeschlossen, wenn eine Stirnseite 30 der Stellschraube 15 dichtend mit dem Werkzeug 6 abschließt. Nach dem Abschluss dieser Verstellbewegung ist die Rohrschraube 16 um ein Maß a in Richtung z verschoben, so dass das Rohrelement 14 nicht mehr so tief in der Hülse 13 steckt. Die für das Nachstellen erforderliche Verlängerung der Vorrichtung 1 erfolgt somit durch eine auseinanderziehen der Hülse 13 und des Rohrelements 14. Durch eine der Drehrichtung w entgegengesetzte Drehung des Steckschlüssels im Eingriff 27 erfolgt ein Zurückziehen der Stellaschraube 15 in die Pfeilrichtung z' und ein Zusammenschieben bzw. Verkürzen der Vorrichtung 9, was durch ein tieferes Einschieben des Rohrelements 14 in die Hülse 13 erfolgt. Anders ausgedrückt ist die Rohrschraube 16 relativ zu dem Spannfutter 1 verschiebbar in der Hülse 13 und im Gewinde G2 angeordnet.

Weiterhin erlaubt die Vorrichtung 9 zur automatischen Einstellung der Einspanntiefe des Werkzeugs 6 eine nur symbolisch angedeutete Lanze 31 einer nicht dargestellten automatischen Werkzeugjustiervorrichtung durch die Hülse 13, das Rohrelement 14 und die Stellschraube 15 hindurch zu führen, so dass diese als Anschlag für das Werkzeug 6 dient. Das heißt, das Werkzeug 6 wird im entspannten Zustand des Hydrodehnspannfutters 1 an die Lanze 31 herangeschoben und anschließend im Hydrodehnspannfutter 1 eingespannt, so dass es in der durch die Lanze vorgegebenen Einspanntiefe gehalten wird. Anschließend wird die Vorrichtung 9 so verstellt, dass die Stellschraube 15 das Werkzeug 6 kontaktiert.

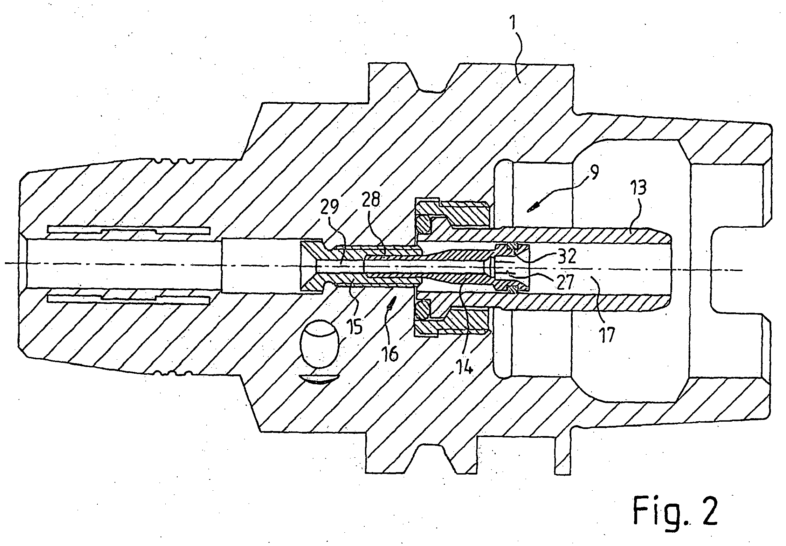

In der Fig. 2 ist das in Fig. 1 gezeigte Spannfutter 1 nochmals dargestellt, wobei die Rohrschraube 16 zweiteilig ausgebildet ist. Die Rohrschraube 16 besteht hier aus einem Rohrelement 14 , welches mit einem Endabschnitt 28 in einen Kanal 29 einer Stellschraube 15 steckt und mit dieser verklebt ist. Somit sind das Rohrelement 14 und die Stellschraube 15 drehfest miteinander verbunden. Eine Drehung eines Steckschlüssels, welcher in einen Eingriff 27 des Rohrelements 14 greift, bewirkt eine gemeinsame Drehung und Verschiebung des Rohrelements 14 und der Stellschraube 15. Im weiteren Unterschied zu der in der **Fig. 1** gezeigten Konstruktion des Kühl- bzw. Schmiermittelübergabesatzes 9, weist das Rohrelement 14 eine O-Ringdichtung 32 auf mit welcher dieses in der Durchgangsbohrung 17 der Hülse 15 verfahrbar ist.

Gemäß einer nicht dargestellten Ausführungsvariante ist es vorgesehen, einen Eingriff für einen Steckschlüssel in der Stellschraube vorzusehen und den Kanal des Rohrelements und die Durchgangsbohrung der Hülse so zu bemessen, dass der Steckschlüssel durch diese hindurch in den Eingriff eingreifen kann.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere ist es vorgesehen bei einer mehrteiligen Ausführung von Einstellschraube und Rohrelement, Rohrelemente unterschiedlicher Länge bereitzuhalten, um Spannfutter mit unterschiedlichen Abmessungen erfindungsgemäß ausbilden zu können.

### Bezugszeichenliste:

- 1: Spannfutter
- 2: Bohrung in 2
- 3: Spannabschnitt von 1
- 4: Mittelabschnitt von 1
- 5: Kupplungsabschnitt von 1
- 6: Werkzeug
- 7: Mediumkanal in 6
- 8: Bodenfläche von 6
- 9: Vorrichtung
- 10: Leitung (von der Spindel)
- 11: Ringkanal in 1
- 12: Bohrung in 1
- 13: Hülse
- 14: Rohrelement
- 15: Stellschraube
- 16: Rohrschraube
- 17: Durchgangsbohrung in 13
- 18: Endbereich von 13
- 19: Absatz an 13
- 20: O-Ringdichtung von 13
- 21: Gewindehülse
- 22: Wandung
- 23: O-Ringdichtung zwischen 13 und 1
- 24: Endabschnitt von 13
- 25: Endabschnitt von 14
- 26: Kanal von 14
- 27: Eingriff für Stellwerkzeug in 13
- 28: Endabschnitt von 14
- 29: Kanal von 15
- 30: Stirnseite von 15
- 31: Lanze
- 32: O-Ringdichtung an 14
- 1: Längsachse von 1
- G₂, G₁₅, G₂₁: Gewinde

## Patentansprüche

1. Spannfutter (1) für ein Werkzeug (6), mit einem Spannabschnitt (3), einem Mittelabschnitt (4) und einem Hohlschaftkegel(HSK)-Kupplungsabschnitt (5), mit einer Vorrichtung (9) zur Zuführung eines Kühl- und/oder Schmiermediums an einen Mediumkanal (7) des im Spannfutter (1) gehaltenen Werkzeugs (6), wobei in dem Spannfutter (1) eine Hülse (13) angeordnet ist, welche als Kupplung für eine Zufuhrleitung (10) für die Versorgung mit Medium dient, wobei in der Hülse (13) ein Rohrelement (14) steckt, dem eine Stellschraube (15) nachgeordnet ist und wobei die Stellschraube (15) gegenüber dem Spannfutter (1) in Richtung der Längsachse (I) des Spannfutters (1) verstellbar ist, wobei das Rohrelement (14) in der Hülse (13) in Richtung der Längsachse (I) des Spannfutters (1) verschiebbar ist und ein Eingriff (27) als Aufnahme für einen Steckschlüssel in dem Rohrelement (14) oder der Stellschraube (15) ausgebildet ist, **dadurch gekennzeichnet, dass** das Rohrelement (14) auf der dem Werkzeug (6) entgegengesetzten Seite (25) über den Steckschlüssel betätigbar ist und mit der Stellschraube (15) drehfest verbunden ist.

2. Spannfutter nach Anspruch 1, **dadurch gekennzeichnet, dass** das Rohrelement (14) mit der Stellschraube (15) verklebt und/oder verschraubt ist und/oder in Bezug auf die Stellschraube eine Kontur aufweist, die ein Verdrehen des Rohrelements (14) in der Stellschraube verhindert.

3. Spannfutter nach einem der vorhergehenden Ansprüche, **dadurch gekennzeichnet, dass** das Rohrelement (14) und die Stellschraube (15) einteilig, insbesondere als Drehteil (16) ausgebildet sind.

4. Spannfutter nach einem der vorhergehenden Ansprüche, **dadurch gekennzeichnet, dass** das Rohrelement (14) und die Hülse (13), insbesondere durch eine Durchgangsbohrung (17) so ausgebildet sind, dass ein Stellwerkzeug zum Verdrehen des Rohrelements (14) in dieses eingreifen kann.

5. Spannfutter (1) für ein Werkzeug (6), mit einem Spannabschnitt (3), einem Mittelabschnitt (4) und einem Hohlschaftkegel(HSK)-Kupplungsabschnitt (5), mit einer Vorrichtung (9) zur Zuführung eines Kühl- und/oder Schmiermediums an einen Mediumkanal (7) des im Spannfutter (1) gehaltenen Werkzeugs (6), wobei in dem Spannfutter (1) eine Hülse (13) angeordnet ist, welche als Kupplung für eine Zufuhrleitung (10) für die Versorgung mit Medium dient, wobei in der Hülse (13) ein Rohrelement (14) steckt, wobei sich eine Durchgangsbohrung in der Hülse (13) in dem Rohrelement (14) fortsetzt, dem eine Stellschraube (15) nachgeordnet ist und wobei die Stellschraube (15) gegenüber dem Spannfutter (1) in Richtung der Längsachse (I) des Spannfutters (1) über einen Eingriff (27) als Aufnahme für einen Steckschlüssel verstellbar ist, **dadurch gekennzeichnet, dass** das Rohrelement (14) in der Hülse (13) und/oder in der Stellschraube (15) verschiebbar geführt ist, dass ein Kanal (29) des Rohrelements (14) und die Durchgangsbohrung der Hülse (13) so bemessen sind, dass der Steckschlüssel von der dem Werkzeug (6) entgegengesetzten Seite durch die Hülse (13) und das Rohrelement (14) auf die Stellschraube (15) einwirken kann und dass der Steckschlüssel gegenüber der Hülse (13) und dem Rohrelement (14) frei drehbar ist.

6. Spannfutter nach einem der vorhergehenden Ansprüche, **dadurch gekennzeichnet, dass** das Rohrelement (14) gegenüber der Hülse (13) abgedichtet ist.

7. Spannfutter nach einem der vorhergehenden Ansprüche, **dadurch gekennzeichnet, dass** das Rohrelement (14) gegenüber der Hülse (13) mittels wenigstens einer O-Ringdichtung (20, 32) abgedichtet ist, wobei die O-Ringdichtung (20 , 32) in der Hülse (13) und/oder an dem Rohrelement (14) gelagert ist.

8. Spannfutter nach einem der vorhergehenden Ansprüche, **dadurch gekennzeichnet, dass** das Rohrelement (14) gegenüber der Hülse (13) mittels einer Berührungsdichtung oder Lippendichtung abgedichtet ist.

9. Spannfutter nach einem der vorhergehenden Ansprüche, **dadurch gekennzeichnet, dass** der Eingriff als Aufnahme für einen Sechskantschlüssel ausgebildet ist.

10. Spannfutter nach einem der vorhergehenden Ansprüche, **dadurch gekennzeichnet, dass** die Hülse (13) einen Innendurchmesser aufweist, welcher sich zu dem Rohrelement (14) hin wenigstens abschnittsweise verjüngt.

11. Spannfutter nach einem der vorhergehenden Ansprüche, **dadurch gekennzeichnet, dass** die Hülse (13) mittels einer Gewindehülse (21) am Spannfutter (1) verschraubt ist.

12. Spannfutter nach einem der vorhergehenden Ansprüche, **dadurch gekennzeichnet, dass** die Hülse (13) mittels einer O-Ringdichtung (23) gegenüber dem Spannfutter (1) abgedichtet ist.

13. Spannfutter nach einem der vorhergehenden Ansprüche, **dadurch gekennzeichnet, dass** sich ein Kanal (29) in der Stellschraube (15) zum Werkzeug (6) hin trichterförmig öffnet.

14. Spannfutter nach einem der vorhergehenden Ansprüche, **dadurch gekennzeichnet, dass** die Hülse (13), das Rohrelement (14) und die Stellschraube (15) aus Kunststoff und/oder Metall und/oder Keramik ausgebildet sind.

15. Spannfutter nach einem der vorhergehenden Ansprüche, **dadurch gekennzeichnet, dass** die Hülse (13) und/oder das Rohrelement (14) und/oder die Stellschraube (15) eine Beschichtung aufweisen.

16. Spannfutter nach einem der vorhergehenden Ansprüche, **dadurch gekennzeichnet, dass** die Hülse (13), das Rohrelement (14) und die Stellschraube (15) von einem Verstellbolzen (31) einer automatischen Vorrichtung zur Einstellung der Position des Werkzeugs (6) durchdringbar sind, so dass der Verstellbolzen (31) in Richtung der Längsachse (I) des Spannfutters (1), z.B. zur Positionierung eines Werkzeugs, verschiebbar ist.

17. Spannfutter nach einem der vorhergehenden Ansprüche, **dadurch gekennzeichnet, dass** das Stellwerkzeug mittelbar oder unmittelbar auf das Rohrelement (14) wirkt.

18. Spannfutter nach einem der vorhergehenden Ansprüche, **dadurch gekennzeichnet, dass** das Rohrelement (14) aus wenigstes zwei Teilelementen aufgebaut ist.

19. Spannfutter nach einem der vorhergehenden Ansprüche, **dadurch gekennzeichnet, dass** die Teilelemente, welche das Rohrelement (14) bilden, aus unterschiedlichen Materialien, insbesondere aus CFK oder Kunststoff und Metall ausgebildet sind.

20. Spannfutter nach einem der vorhergehenden Ansprüche, **dadurch gekennzeichnet, dass** der Eingriff (27) in dem Rohrelement (14) als Schlitz, Innenvielkant, insbesondere Innensechskant, Innen-Torx-Ausnehmung oder Außenvielkant, insbesondere Außenvierkant ausgebildet ist.

21. Spannfutter nach einem der vorhergehenden Ansprüche, **dadurch gekennzeichnet, dass** zwischen dem Eingriff (27) des Rohrelements (14) und dem Stellwerkzeug ein Adapter angeordnet ist, welcher abnehmbar ist oder auch im Betrieb des Spannfutters mit dem Rohrelement verbunden bleibt.

22. Spannfutter nach einem der vorhergehenden Ansprüche, **dadurch gekennzeichnet, dass** an der Hülse (13) ein Eingriff für das Stellwerkzeug vorgesehen ist und das Rohrelement (14) drehfest und längsverschiebbar mit der Hülse (13) gekoppelt ist.

23. Spannfutter nach einem der vorhergehenden Ansprüche, **dadurch gekennzeichnet, dass** das Rohrelement (14) mit wenigstens eine Nase in einem Längsschlitz der Hülse (13) geführt ist, wobei die Hülse (13) das Rohrelement (14) bei einer Drehbewegung mitnimmt.

## Claims

1. A clamping chuck (1) for a tool (6), comprising a clamping section (3), a middle section (4) and a hollow shaft cone (HSK) coupling section (5), having a device (9) for feeding a cooling and/or lubricating medium to a medium channel (7) of the tool (6) held in the clamping chuck (1), there being disposed in the clamping chuck (1) a sleeve (13) which serves as a coupling for a feed line (10) for supplying medium, a tube element (14) with an adjusting screw (15) disposed downstream thereof being inserted in the sleeve (13), and the adjusting screw (15) being adjustable relative to the clamping chuck (1) in the direction of the longitudinal axis (I)
of the clamping chuck (1), the tube element (14) being displaceable in the sleeve (13) in the direction of the longitudinal axis (I) of the clamping chuck (1), and an engaging feature (27) as a receiver for a socket wrench being constructed in the tube element (14) or the adjusting screw (15), **characterised in that** the tube element (14) is operable at the opposite end (25) from the tool (6) by way of the socket wrench and is connected to the adjusting screw (15) in a rotationally rigid manner.

2. A clamping chuck according to claim 1, **characterised in that** the tube element (14) is adhesively bonded to and/or screwed to the adjusting screw (15) and/or has in relation to the adjusting screw a contour that prevents rotation of the tube element (14) in the adjusting screw.

3. A clamping chuck according to either of the preceding claims, **characterised in that** the tube element (14) and the adjusting screw (15) are formed in one piece, especially as a turned part (16).

4. A clamping chuck according to any one of the preceding claims, **characterised in that** the tube element (14) and the sleeve (13) are so constructed, especially by a through-bore (17), that an adjusting tool for rotating the tube element (14) is able to engage in the tube element (14).

5. A clamping chuck (1) for a tool (6), comprising a clamping section (3), a middle section (4) and a hollow shaft cone (HSK) coupling section (5), having a device (9) for feeding a cooling and/or lubricating medium to a medium channel (7) of the tool (6) held in the clamping chuck (1), there being disposed in the clamping chuck (1) a sleeve (13) which serves as a coupling for a feed line (10) for supplying medium, in said sleeve (13) a tube element (14) being positioned a through-bore in the sleeve (13) continuing in the tube element (14) having an adjusting screw (15) disposed downstream thereof, and the adjusting screw (15) being adjustable relative to the clamping chuck (1) in the direction of the longitudinal axis (I) of the clamping chuck (1) by an engaging feature (27) as a receiver for a socket wrench, **characterised in that** the tube element (14) is displaceably guided in the sleeve (13) and/or in the adjusting screw (15), a channel (29) of the tube element (14) and the through-bore of the sleeve (13) are so dimensioned that the socket is able to act on the adjusting screw (15) through the sleeve (13) and the tube element (14) from the opposite end from the tool (6), and the socket is freely rotatable relative to the sleeve (13) and the tube element (14).

6. A clamping chuck according to any one of the preceding claims, **characterised in that** the tube element (14) is sealed with respect to the sleeve (13).

7. A clamping chuck according to any one of the preceding claims, **characterised in that** the tube element (14) is sealed with respect to the sleeve (13) by means of at least one O-ring seal (20, 32), the O-ring seal (20, 32) being supported in the sleeve (13) and/or on the tube element (14).

8. A clamping chuck according to any one of the preceding claims, **characterised in that** the tube element (14) is sealed with respect to the sleeve (13) by means of a contact seal or lip seal.

9. A clamping chuck according to any one of the preceding claims, **characterised in that** the engaging feature is constructed as a receiving feature for a hexagonal wrench.

10. A clamping chuck according to any one of the preceding claims, **characterised in that** the sleeve (13) has an internal diameter which tapers at least in portions towards the tube element (14).

11. A clamping chuck according to any one of the preceding claims, **characterised in that** the sleeve (13) is screwed to the clamping chuck (1) by means of a threaded bush (21).

12. A clamping chuck according to any one of the preceding claims, **characterised in that** the sleeve (13) is sealed with respect to the clamping chuck (1) by means of an O-ring seal (23).

13. A clamping chuck according to any one of the preceding claims, **characterised in that** a channel (29) in the adjusting screw (15) opens out in a funnel shape towards the tool (6).

14. A clamping chuck according to any one of the preceding claims, **characterised in that** the sleeve (13), the tube element (14) and the adjusting screw (15) are made of plastics material and/or metal and/or ceramic material.

15. A clamping chuck according to any one of the preceding claims, **characterised in that** the sleeve (13) and/or the tube element (14) and/or the adjusting screw (15) have a coating.

16. A clamping chuck according to any one of the preceding claims, **characterised in that** the sleeve (13), the tube element (14) and the adjusting screw (15) can be penetrated by an adjusting pin (31) of an automatic device for adjusting the position of the tool (6), so that the adjusting pin (31) is displaceable in the direction of the longitudinal axis (I) of the clamping chuck (1), for example for positioning of a tool (6).

17. A clamping chuck according to any one of the preceding claims, **characterised in that** the adjusting tool acts on the tube element (14) directly or indirectly.

18. A clamping chuck according to any one of the preceding claims, **characterised in that** the tube element (14) is made up of at least two sub-elements.

19. A clamping chuck according to any one of the preceding claims, **characterised in that** the sub-elements forming the tube element (14) are made of different materials, especially CFRP or plastics material and metal.

20. A clamping chuck according to any one of the preceding claims, **characterised in that** the engaging feature (27) in the tube element (14) is constructed as a slot, an internal polygon, especially an internal hexagon, an internal Torx recess or an external polygon, especially an external square.

21. A clamping chuck according to any one of the preceding claims, **characterised in that** an adapter is disposed between the engaging feature (27) of the tube element (14) and the adjusting tool, which adapter is removable or alternatively remains connected to the tube element when the clamping chuck is in operation.

22. A clamping chuck according to any one of the preceding claims, **characterised in that** an engaging feature for the adjusting tool is provided on the sleeve (13), and the tube element (14) is coupled to the sleeve (13) in a rotationally rigid and longitudinally displaceable manner.

23. A clamping chuck according to any one of the preceding claims, **characterised in that** the tube element (14) is guided by at least one nose in a longitudinal slot of the sleeve (13), the sleeve (13) taking the tube element (14) with it upon rotary movement.

## Revendications

1. Mandrin de serrage (1) pour un outil (6) avec une section de serrage (3), une section centrale (4) et une section d'accouplement (5) réalisée comme HSK-cône creux, comportant un dispositif (9) d'amenée d'un agent réfrigérant et/ou lubrifiant à un canal pour fluide (7) de l'outil (6) maintenu dans le mandrin de serrage (1), un manchon (13) étant disposé dans le mandrin de serrage (1), lequel sert d'accouplement à une conduite d'amenée (10) pour l'alimentation en agent, un élément tubulaire (14) étant logé dans le manchon (13), en aval duquel est disposée une vis de réglage (15), la vis de réglage (15) étant déplaçable par rapport au mandrin de serrage (1) dans la direction de l'axe longitudinal (I) du mandrin de serrage (1), l'élément tubulaire (14) étant déplaçable dans le manchon (13) dans la direction de l'axe longitudinal (I) du mandrin de serrage (1) et une prise (27) réalisée comme une réception pour une clé à tube et étant formée dans l'élément tubulaire (14) ou la vis de réglage (15), **caractérisé en ce que** l'élément tubulaire (14) peut être actionné par la clé à tube sur le côté (25) opposé à l'outil (6), et **en ce que** l'élément tubulaire est raccordé de manière solidaire en rotation à la vis de réglage (15).

2. Mandrin de serrage selon la revendication 1, **caractérisé en ce que** l'élément tubulaire (14) est collé et/ou vissé à la vis de réglage (15), et/ou présente un contour par rapport à la vis de réglage, lequel empêche une rotation de l'élément tubulaire (14) dans la vis de réglage.

3. Mandrin de serrage selon l'une des revendications précédentes, **caractérisé en ce que** l'élément tubulaire (14) et la vis de réglage (15) sont réalisés d'un seule tenant, en particulier comme pièce rotative (16).

4. Mandrin de serrage selon l'une des revendications précédentes, **caractérisé en ce que** l'élément tubulaire (14) et le manchon (13) sont réalisés de manière à permettre, en particulier au moyen d'un alésage traversant (17), l'engagement dans l'élément tubulaire (14) d'un outil de réglage destiné à tourner celui-ci.

5. Mandrin de serrage (1) pour un outil (6) avec une section de serrage (3), une section centrale (4) et une section d'accouplement (5) réalisée comme HSK-cône creux, comportant un dispositif (9) d'amenée d'un agent réfrigérant et/ou lubrifiant à un canal pour fluide (7) de l'outil (6) maintenu dans le mandrin de serrage (1), un manchon (13) étant disposé dans le mandrin de serrage (1), lequel sert d'accouplement à une conduite d'amenée (10) pour l'alimentation en agent, un élément tubulaire (14) étant reçu dans le manchon (13), un alésage traversant se poursuivant dans cet élément tubulaire (14) du manchon (13), en aval duquel est disposée une vis de réglage (15), la vis de réglage (15) étant déplaçable par rapport au mandrin de serrage (1) dans la direction de l'axe longitudinal (I) du mandrin de serrage (1) par voie d'une prise (27) réalisée comme réception pour une clé à tube, **caractérisé en ce que** l'élément tubulaire (14) peut être coulissé dans le manchon (13) et/ou dans la vis de réglage (15), **en ce qu'**un canal (29) de l'élément tubulaire (14) et l'alésage traversant du manchon (13) sont dimensionnés de telle manière que la clé à tube peut agir sur la vis de réglage (15) depuis le côté opposé à l'outil (6) en traversant le manchon (13) et l'élément tubulaire (14), et **en ce que** la clé à tube est librement rotatif par rapport au manchon (13) et à l'élément tubulaire (14).

6. Mandrin de serrage selon l'une des revendications précédentes, **caractérisé en ce que** l'élément tubulaire (14) est étanchéifié par rapport au manchon (13).

7. Mandrin de serrage selon l'une des revendications précédentes, **caractérisé en ce que** l'élément tubulaire (14) est étanchéifié par rapport au manchon (13) au moyen d'au moins un joint torique (20, 32), ledit joint torique (20, 32) étant monté dans le manchon (13) et/ou contre l'élément tubulaire (14).

8. Mandrin de serrage selon l'une des revendications précédentes, **caractérisé en ce que** l'élément tubulaire (14) est étanchéifié par rapport au manchon (13) au moyen d'un joint d'étanchéité par contact ou d'un joint à lèvres.

9. Mandrin de serrage selon l'une des revendications précédentes, **caractérisé en ce que** la prise est réalisée comme réception pour une clé à six pans.

10. Mandrin de serrage selon l'une des revendications précédentes, **caractérisé en ce que** le manchon (13) présente un diamètre intérieur qui se rétrécit au moins partiellement en direction de l'élément tubulaire (14).

11. Mandrin de serrage selon l'une des revendications précédentes, **caractérisé en ce que** le manchon (13) est vissé par un manchon fileté (21) sur le mandrin de serrage (1).

12. Mandrin de serrage selon l'une des revendications précédentes, **caractérisé en ce que** le manchon (13) est étanchéifié par rapport au mandrin de serrage (1) au moyen d'un joint torique (23).

13. Mandrin de serrage selon l'une des revendications précédentes, **caractérisé en ce qu'**un canal (29) s'ouvre en forme d'entonnoir vers l'outil (6) dans la vis de réglage (15).

14. Mandrin de serrage selon l'une des revendications précédentes, **caractérisé en ce que** le manchon (13), l'élément tubulaire (14) et la vis de réglage (15) sont en matière plastique et/ou en métal et/ou en céramique.

15. Mandrin de serrage selon l'une des revendications précédentes, **caractérisé en ce que** le manchon (13) et/ou l'élément tubulaire (14) et/ou la vis de réglage (15) sont pourvus d'un revêtement.

16. Mandrin de serrage selon l'une des revendications précédentes, **caractérisé en ce que** le manchon (13), l'élément tubulaire (14) et la vis de réglage (15) peuvent être traversés par un axe de réglage (31) d'un dispositif de réglage automatique de la position de l'outil (6), de telle manière que l'axe de réglage (31) soit déplaçable dans la direction de l'axe longitudinal (I) du mandrin de serrage (1), notamment pour le positionnement d'un outil.

17. Mandrin de serrage selon l'une des revendications précédentes, **caractérisé en ce que** l'outil de réglage agit directement ou indirectement sur l'élément tubulaire (14).

18. Mandrin de serrage selon l'une des revendications précédentes, **caractérisé en ce que** l'élément tubulaire (14) est constitué d'au moins deux éléments partiels.

19. Mandrin de serrage selon l'une des revendications précédentes, **caractérisé en ce que** les éléments partiels qui forment l'élément tubulaire (14) sont réalisés dans des matériaux différents, en particulier en CFK ou en matière plastique et en métal.

20. Mandrin de serrage selon l'une des revendications précédentes, **caractérisé en ce que** la prise (27) dans l'élément tubulaire (14) est réalisée sous forme de fente, de multi-pans femelle, en particulier de six pans creux, d'empreinte TORX ou de multi-pans mâle, en particulier de carré mâle.

21. Mandrin de serrage selon l'une des revendications précédentes, **caractérisé en ce qu'**un un adaptateur est disposé entre la prise (27) de l'élément tubulaire (14) et l'outil de réglage, lequel est amovible ou reste raccordé à l'élément tubulaire, y compris en état de fonctionnement du mandrin de serrage.

22. Mandrin de serrage selon l'une des revendications précédentes, **caractérisé en ce qu'**une prise pour l'outil de réglage est prévue sur le manchon (13), et **en ce que** l'élément tubulaire (14) est accouplé au manchon (13) de manière solidaire en rotation et déplaçable dans le sens de la longueur.

23. Mandrin de serrage selon l'une des revendications précédentes, **caractérisé en ce que** l'élément tubulaire (14) est guidé par au moins un tenon dans une fente longitudinale du manchon (13), ledit manchon (13) entraînant l'élément tubulaire (14) en cas de mouvement rotatif.
